# EUROPÄISCHE PATENTSCHRIFT

(11) **EP 3 532 271 B1**
(45) Veröffentlichungstag und Bekanntmachung des Hinweises auf die Patenterteilung: **07.10.2020**
(21) Anmeldenummer: 17800411.5
(22) Anmeldetag: 27.10.2017
(51) Int. Cl.: B29C 65/78, B29C 65/02, B31B 70/98

(54) **VERBESSERUNG IN DER KLAPPBEUTELHERSTELLUNG**
IMPROVEMENT IN FLAP BAG PRODUCTION
AMÉLIORATION DE LA FABRICATION DE SACHETS À RABAT

(30) Priorität: 27.10.2016 DE 102016120582
(43) Veröffentlichungstag der Anmeldung: 04.09.2019
(73) Patentinhaber: LEMO Maschinenbau GmbH, 53859 Niederkassel-Mondorf (DE)
(72) Erfinder: ODENTHAL, Hartmut, 53844 Troisdorf (DE)
(74) Vertreter: Greif, Thomas
(86) Internationale Anmeldenummer: PCT/EP2017/077673
(87) Internationale Veröffentlichungsnummer: WO 2018/078133

(56) Entgegenhaltungen:
- DE-A1- 3 524 675
- DE-A1- 3 611 369
- DE-A1- 3 808 764
- DE-A1- 3 937 509

## Beschreibung

Die Erfindung betrifft ein Verfahren zur Herstellung und Ablage eines Beutels sowie eine Vorrichtung mit einer Herstellungsvorrichtung zur Herstellung und mit einer Ablagevorrichtung zur Ablage eines Beutels gemäß den Merkmalen der Oberbegriffe der beiden unabhängigen Patentansprüche.

Es ist eine Herstellungsvorrichtung bekannt, mit der ein Beutel hergestellt wird. Zu diesem Zweck werden zwei Lagen von Material übereinandergelegt, sodass an der einen Seite eine Einfüllöffnung realisiert ist. Beispielsweise auf der gegenüberliegenden Seite der Öffnung ist der Boden vorhanden. Die beiden Seiten des Materials werden auf geeignete Weise miteinander verschweißt, wobei Wärme in diesen Bereich eingetragen wird beziehungsweise Wärme entsteht und die daraus resultierende Seitennaht erst nach einer gewissen Zeit die beiden Seitenkanten der zwei Lagen von Material dauerhaft miteinander verbindet. Vorher ist der zusammengefügte Seitenbereich noch plastifiziert und anfällig für Kräfteeinwirkungen, die zu einer Beeinträchtigung der Fügeverbindung nach dem Plastifizieren führen können.

Nachdem der Beutel hergestellt worden ist, wobei der Boden durch Umklappen der beiden Lagen von Material oder auch durch Verschweißen der beiden Seiten realisiert werden kann, wird er von einem Transportarm in Richtung einer Ablagevorrichtung bewegt. Dabei ist der Transportarm an einem oberen Ende des Beutels, das dem Boden abgewandt ist, angeordnet, wobei dieses obere Ende auf den Transportarm aufgelegt wird und durch Unterdruck gehalten wird. Während des Haltens des oberen Endes des Beutels wird der Transportarm bewegt, beispielsweise verschwenkt, und zwar in Richtung der Ablagevorrichtung. Dort wird dann nach und nach jeder Beutel, der von der Herstellungsvorrichtung erzeugt worden ist, abgelegt, sodass sich ein Stapel von Beuteln bildet. Nachdem eine vorbestimmte Anzahl von Beuteln gestapelt worden ist, wird dieser Stapel abtransportiert, sodass ein neuer Stapel angelegt wird, wobei sich dieser Vorgang beliebig lange wiederholt. Damit ist die Serienherstellung von Beuteln gegeben.

Die herkömmliche Paketbildung bzw. der Transport der Beutel auf Saugarmen auf die Stapelstifte birgt ein Qualitätsrisiko, besonders bei großen Beutelformaten und großen Folienstärken.

Der Beutel kann nur am äußeren Rand im Bereich der Einfüllöffnung, bei Klappenbeuteln im Bereich der (einlagigen) Klappe gehalten werden, damit man ihn auf die Stapelstifte einer Ablagevorrichtung aufbringen kann. Im doppellagigen Bereich kann der Beutel nach seiner Ablage erst wieder in der Beutelmitte und dann noch mal am unteren Rand gestützt werden. Vorher findet während der Bewegung zu der Ablagevorrichtung hin keine Stützung statt, so dass äußere Bewegungskräfte und auch Eigenbewegungskräfte auf den Klappenbeutel wirken.

Der Beutel wird beispielsweise so produziert, das der (einlagige) Klappenbereich unten liegt (nach unten in Richtung Boden, auf dem die gesamte Vorrichtung aufgestellt ist, weist; zusammen mit der Lage des Materials, in deren Verlängerung sich die Klappe erstreckt; diese Lage des Materials weist dann ebenfalls nach unten, während die zweite Lage nach oben weist) und von den rotierenden Saugarmpaaren dann von unten aufgenommen und um 180° gedreht (Klappe dann oben, zusammen mit der Lage des Materials, in deren Verlängerung sich die Klappe erstreckt; diese Lage des Materials weist dann ebenfalls nach oben, während die zweite Lage jetzt nach unten weist) auf die Stapelstifte abgelegt.

In dieser Drehphase ist die Naht, insbesondere die beiden Seitennähte, des Beutels noch plastifiziert (aufgrund der Wärmeeinwirkung während des Verschmelzungsvorganges also noch nicht ausgehärtet). Durch die Drehbewegung hängt der nicht gestützte doppellagige Bereich durch sein Eigengewicht nach unten durch und zieht an den Seiten der noch heißen und plastifizierten Nähte. Das kann zu Beschädigungen der Nähte führen und dadurch zu Ausschuss in der Produktion.

Die DE 39 37 509 A1 offenbart einen Vakuumarm für eine Förderstapelanordnung einer Beutelherstellmaschine mit einem abgeschrägten Abschnitt am Außenende des Vakuumarmes.

Die DE 35 24 675 A1 zeigt eine Vorrichtung zum Stapeln von Bögen oder dünnen Lagen, nachdem diese aus einem langgestreckten Streifen von Bahnenmaterial geschnitten worden sind, gekennzeichnet durch eine Einrichtung zum Greifen eines jeden Bogens, nachdem dieser hergestellt worden ist, und zum Verschieben des Bogens längs einer gekrümmten Bahn, wobei die Greifeinrichtung mit jedem Bogen auf entgegengesetzten Seiten seiner Mittelzone in Eingriff steht, eine Einrichtung am Ende der Bahn zum sequentiellen Sammeln der Bögen in einem Stapel, so dass die sich von der Mittelzone nach außen erstreckenden Bogenabschnitte nach unten herabhängen, wobei die Sammeleinrichtung zumindest zwei nach oben vorstehende Stifte umfasst, um den Bogen in seiner Mittelzone zu durchstechen und hierdurch jeden Bogen zu halten.

Aus der DE 38 08 764 A1 ist eine Ablagevorrichtung für Kunststoffbeutel bekannt, bei der nach der Beutelmaschine eine aus Transportbändern aufgebaute Transportvorrichtung vorgesehen ist, die die fertigen mit zwei Löchern für die Aufnahme auf einer Stiftstapel-Ablage versehenen Beutel zu einer Übergabevorrichtung für die Übergabe auf die Stiftstapel-Ablage befördert, wobei die Übergabevorrichtung ein umlaufendes Saugband und eine mit Sauggreifern versehene Verschiebevorrichtung aufweist, die die auf das Saugband übergebenen Beutel nach deren Positionierung vom Saugband auf die Stiftstapel-Ablage überführt, wobei die Steuerung des Saugbandes über eine den auf dem Saugband liegenden Beutel abtastende Lichtschranke (9) erfolgt und wobei vor dem Saugband eine Ionisierungsvorrichtung vorgesehen ist.

Die DE 36 11 369 A1 schließlich offenbart eine Vorrichtung zum Übergeben und Sammeln von Bögen, die aus einer langgestreckten flexiblen Materialbahn durch Zertrennen derselben in im wesentlichen gleichen Abständen quer zu den Längskanten der Materialbahn hergestellt sind, welche in einem linearen Weg zugeführt wird, der im Wesentlichen parallel zu den Längskanten ist, gekennzeichnet durch eine Einrichtung zum Ergreifen des Bogens an in Längsrichtung beabstandeten Zonen nahe den gegenüberliegenden Längskanten, durch eine Einrichtung zum Sammeln aufeinanderfolgender Bögen zu einem Stapel und durch eine Einrichtung zum Übergeben der Bögen an die Sammeleinrichtung, welche zwischen der Greifeinrichtung und in der Übergabebahn des Bogens liegen, wenn letzterer von der Greifeinrichtung entfernt wird.

Der Erfindung liegt die Aufgabe zugrunde, ein Verfahren zur Herstellung und Ablage eines Beutels sowie eine Vorrichtung mit einer Herstellungsvorrichtung zur Herstellung und mit einer Ablagevorrichtung zur Ablage eines Beutels zu verbessern.

Diese Aufgabe ist durch die Merkmale der beiden unabhängigen Patentansprüche gelöst.

Hinsichtlich des Verfahrens ist erfindungsgemäß vorgesehen, dass der zumindest eine Transportarm parallel zu der Seitennaht des Beutels ausgerichtet ist und der Seitenbereich des Beutels nach der Verschweißung der beiden Lagen, wodurch die Seitennaht gebildet wird, auf den Transportarm aufgelegt wird und der Beutel während der Bewegung zu der Ablagevorrichtung und bis zur Ablage durch Unterdruck an dem Transportarm gehalten wird. Dies hat den Vorteil, dass keine Kräfte auf den verschweißten Bereich der beiden Lagen im Seitenbereich des Beutels einwirken, wenn dieser nach dem Verlassen der Herstellungsvorrichtung in Richtung der nachgeschalteten Ablagevorrichtung bewegt wird. Es wird somit vermieden, dass sich der Seitenbereich des Beutels während der Bewegungsphase, in der die Seitennaht des Beutels noch plastifiziert ist (also noch nicht vollständig die gewünschte feste Fügeverbindung erzielt wurde), nicht bewegt, um eben die vollständig gewünschte feste Fügeverbindung zu realisieren. Dies wird dadurch erreicht, dass der Seitenbereich des Beutels vollständig auf dem zumindest einen Transportarm durch Unterdruck während der Bewegung nach dem Verlassen der Herstellungsvorrichtung bis hin zu der Ablagevorrichtung lagefixiert ist und somit keine äußeren Kräfte, insbesondere durch eine Bewegung der beiden Lagen des Materials des Beutels, auf den verschweißten Bereich einwirken. Dieser Bereich hat somit Zeit, auszuhärten, um die nötige feste Fügeverbindung bilden zu können. Dadurch wird beim späteren Einsatz eines jeden Beutels in vorteilhafter Weise ein Aufreißen der Seitennaht wirksam vermieden. Die Qualität des derart hergestellten Beutels ist dadurch wesentlich verbessert.

In Weiterbildung der Erfindung sind zwei parallel zueinander ausgerichtete Transportarme vorhanden, wobei jeweils eine Seitennaht auf jeweils einem Transportarm nach der Verschweißung abgelegt und dort während der Bewegung des Beutels zu der Ablagevorrichtung bis zur Ablage des Beutels durch Unterdruck gehalten wird. Dadurch werden die beiden Seitenbereiche, in denen die Seitendaten gebildet worden sind, durch jeweils einen Transportarm gestützt, um zu verhindern, dass während der Bewegung des Beutels nach dem Verlassen der Herstellvorrichtung hin zu der Ablagevorrichtung äußere Kräfte oder Kräfte durch eine Eigenbewegung des Beutels auf die noch nicht plastifizierten Seitennähte einwirken, wobei insbesondere die Eigenbewegungen des Beutels während der Bewegung die noch nicht ausgehärteten Seitennähte schwächen könnten, was bei einem späteren Gebrauch des Beutels zu Rissen führen würde. Dies wird durch die beschriebene Lagefixierung während der Bewegung vermieden.

In Weiterbildung der Erfindung ist vorgesehen, dass der Beutel nach der Verschweißung, die die Seitennaht bildet, von dem zumindest einen Transportarm rotatorisch zu der Ablagevorrichtung bewegt wird. Durch eine solche Drehbewegung von der Herstellungsvorrichtung zu der Ablagevorrichtung lässt sich ein kontinuierlicher Herstellungs- und Ablagevorgang realisieren, mit der eine große Anzahl von Beuteln in kurzer Zeit hintereinander hergestellt und zu einem Stapel abgelegt werden kann, ohne die Festigkeit der Verbindung der beiden Seitennähte der beiden Lagen des Beutels während der Bewegung zu schwächen, da die Zeit für die Bewegung, insbesondere die Drehbewegung des Transportarms, ausgenutzt wird, um während dieser Zeit die Schweißverbindung aushärten zu lassen, ohne dass äußere Kräfte oder Eigenkräfte des Beutels auf diesen verschweißten Bereich einwirken.

In Weiterbildung der Erfindung wird als Beutel mit dem Verfahren ein Klappenbeutel hergestellt, bewegt und auf der Ablagevorrichtung abgelegt, wobei der Klappenbeutel nach seiner Herstellung und während seiner Bewegung mit seinem Seitenbereich, in dem sich sowohl die Seitennaht als auch teilweise eine Klappe befindet, auf dem Transportarm aufliegt. Dadurch wird nicht nur die Festigkeit der Schweißverbindung gesteigert, sondern auch die Klappe des Beutels, die aus einem einlagigen Material besteht, gezielt gehalten und geführt. Dies ermöglicht eine zielgerichtete Ablage des Klappenbeutels mit seiner Klappe auf der Ablagevorrichtung.

Hinsichtlich der Vorrichtung mit einer Herstellungsvorrichtung zur Herstellung und mit einer Ablagevorrichtung zur Ablage eines Beutels ist erfindungsgemäß vorgesehen, dass der zumindest eine Transportarm parallel zu der Seitennaht des Beutels ausgerichtet ist und der Seitenbereich des Beutels nach der Verschweißung der beiden Lagen, wodurch die Seitennaht gebildet wird, auf dem Transportarm aufgelegt wird und der Transportarm zumindest eine einen Unterdruck zur Verfügung stellende Öffnung aufweist, über die der Beutel während der Bewegung zu der Ablagevorrichtung und bis zur Ablage durch Unterdruck an dem Transportarm gehalten wird. In einer besonderen Ausgestaltung liegt die zumindest eine Öffnung, vorzugsweise mehrere Öffnungen, in dem Bereich, in dem sich die beiden miteinander verschweißten Lagen befinden, um diesen Bereich während der Bewegung des Beutels nach dem Verlassen der Herstellungsvorrichtung bis hin zu seiner Ablage auf der Ablagevorrichtung zu stabilisieren, damit während dieser Zeit der verschweißte Bereich der Seitennaht aushärten kann.

In Weiterbildung der Erfindung weist der Transportarm mehrere in einer Reihe hintereinander angeordnete Öffnungen auf. Diese in einer Reihe hintereinander angeordnete Öffnungen stellen einen Unterdruck zur Verfügung, um den Seitenbereich des Beutels an den Transportarm zu ziehen und dort idealerweise planparallel auf dem Transportarm zu halten, während sich der Transportarm bewegt, insbesondere verschwenkt wird. Die in einer Reihe hintereinander angeordneten Öffnungen können genau auf der Linie der Seitennaht liegen, aber auch abweichend davon angeordnet sein.

In Weiterbildung der Erfindung weist der Transportarm parallel zu den mehreren in einer Reihe hintereinander angeordneten Öffnungen eine weitere Reihe von in einer Reihe hintereinander angeordneten Öffnungen auf. Somit sind zwei Reihen gleicher oder voneinander unterschiedlicher Öffnungen parallel zueinander in die Oberfläche des Transportarm eingebracht, um ein Auflagefeld zu bilden, in dem die beiden miteinander verschweißten Seitennähte des Beutels nach dem Verlassen der Herstellungsvorrichtung und während der Bewegung des Transportarm bis hin zur Ablage des Beutels gehalten sind. In diesem Fall können keinerlei äußere Kräfte oder auch Eigenkräfte des Beutels auf den verschweißten Bereich einwirken, sodass dadurch die Festigkeit der fertigen Schweißverbindung nochmals deutlich gesteigert ist.

In Weiterbildung der Erfindung weist der Transportarm eine Aussparung auf, wobei die Aussparung dort angeordnet ist, wo der Transportarm während seiner Bewegung an der Ablagevorrichtung, insbesondere einem Endbereich einer etwa balkenförmig gestalteten Ablagevorrichtung, vorbeibewegt wird. Dadurch wird eine durchgehende rotatorische Bewegung des Transportarmes ermöglicht, sodass er nach der Ablage eines Beutels auf der Ablagevorrichtung sich weiter drehen kann, um nicht nur an der Ablagevorrichtung vorbeizukommen, sondern um wieder in eine Position hinter der Herstellungsvorrichtung zu gelangen, in der er den nächsten hergestellten Beutel zum Abtransport in Richtung der Ablagevorrichtung aufnehmen kann.

In Bezug auf den Transportarm ist bisher ausgeführt worden, dass er zumindest eine Öffnung aufweist, über die ein Unterdruck erzeugt wird, mit der der Beutel an dem Transportarm gehalten wird, während sich der Transportarm von der Herstellungsvorrichtung hin zu der Ablagevorrichtung bewegt. Es versteht sich von selbst, dass entsprechende Mittel vorhanden sind, die nicht nur einen Unterdruck erzeugen, sondern dass auch der erzeugte Unterdruck von der Quelle hin zu der zumindest einen Öffnung in dem Transportarm geleitet wird.

In Weiterbildung der Erfindung ist der Beutel ein Klappenbeutel, wobei der Klappenbeutel nach seiner Herstellung und während seiner Bewegung mit seinem Seitenbereich, in dem sich sowohl die Seitennaht als auch teilweise eine Klappe befindet, auf dem Transportarm aufliegt. Hier gelten die gleichen Ausführungen und die gleichen sich daraus ergebenden Vorteile, wie sie schon bezüglich des zugehörigen Verfahrensanspruches beschrieben worden sind.

Mit anderen Worten kann also der Transportarm (auch als Saugarm zu bezeichnen) den Beutel in einem Randbereich, insbesondere den Klappenbeutel an der Klappe am äußeren Rand, und am doppellagigen Bereich halten. Der äußere Rand des Saugarmes bekommt dazu in bevorzugter Weise eine weitere Lochreihe. Die Aussparung ist notwendig, um Platz für die Stapelstifte der Ablagevorrichtung zu lassen, mit denen der Saugarm ansonsten in der Abwärtsbewegung kollidieren würde. Die Aussparung kann abhängig vom Format des Beutels unterschiedliche Größen haben.

Mit diesem breiten und mit zwei Lochreihen versehenen Saugarm ist die obere und die untere Folienseite des Beutels gleichmäßig gestützt und fixiert, sodass die heiße Naht nicht mehr durch das Durchhängen der unteren Beutelseite strapaziert wird, sondern beide Folienlagen werden durch den Unterdruck über die Löcher in den Saugarmen fixiert.

Die Nahtqualität und die Produktionsgeschwindigkeit kann damit in vorteilhafter Weise gesteigert werden.

Ein Ausführungsbeispiel einer erfindungsgemäßen Vorrichtung und eines erfindungsgemäßen Verfahrens wird im Folgenden im Zusammenhang mit einem Klappenbeutel beschrieben. Allerdings ist die Erfindung nicht auf den gezeigten und beschriebenen Klappenbeutel beschränkt, sondern kann auch bei anderen Formen von Beuteln angewandt werden.

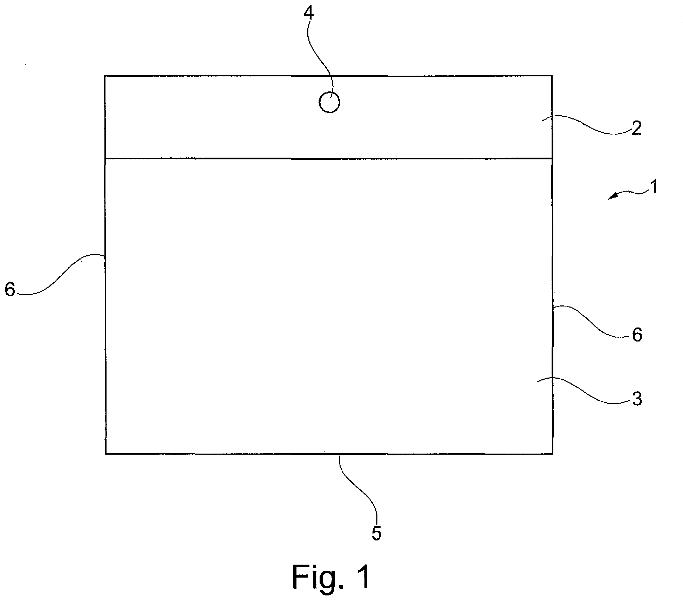

Die Figur 1 zeigt einen Klappenbeutel 1, der eine Klappe 2 aus einem einlagigen Material aufweist. Die Klappe 2 nimmt nur einen kleinen Teil der Gesamtfläche des Klappenbeutels 1 ein, sodass ein Taschenbereich 3 aus zwei Lagen von Material den größeren Bereich ausmacht. In der Klappe 2 kann, muss aber nicht, zumindest ein Stapelloch 4 (allgemein eine Öffnung) eingebracht sein. Mittels dieses zumindest einen Stapelloches 4 wird der fertig hergestellte Klappenbeutel 1 über einen korrespondierenden Stapelstift einer Ablagevorrichtung zugeführt und dort abgelegt.

Der Klappe 2 gegenüberliegend angeordnet ist ein Boden 5, der entweder durch Umklappen der beiden Lagen des Materiales oder durch Verschweißen oder eine sonstige geeignete Fügeverbindung der beiden Lagen des Materiales gebildet ist. Weiterhin weist der Klappenbeutel 1 zwei Seitenbereiche auf, die sich zwischen den Enden der Klappe 2 und dem Boden 5 erstrecken. Diese Seitenbereiche bilden jeweils eine Seitennaht 6, die durch eine geeignete Fügeverbindung, insbesondere durch ein Verschweißen, der beiden Lagen des Materiales gebildet wird. In einer nicht näher dargestellten, aber bekannten Herstellungsvorrichtung wird der in der Figur 1 gezeigte Klappenbeutel 1 hergestellt und einer Transporteinrichtung, aufweisend zumindest einen Transportarm, vorzugsweise zwei parallel zueinander angeordnete Transportarme, übergeben, damit er mittels der Transporteinrichtung in Richtung der Ablagevorrichtung bewegt werden kann.

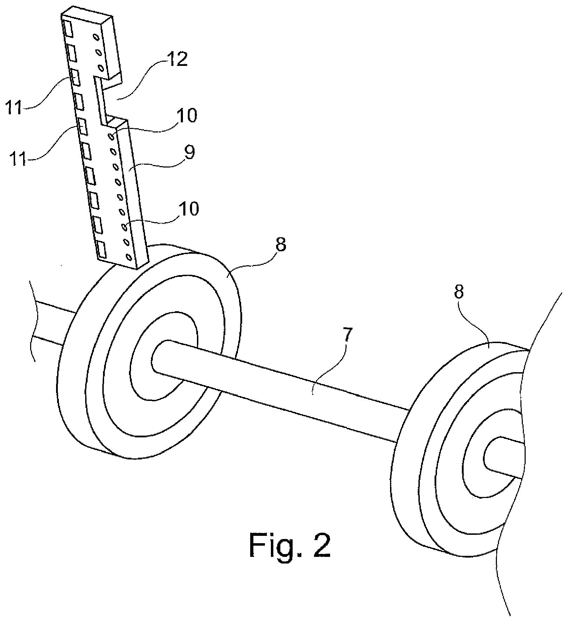

Figur 2 zeigt beispielhaft eine solche Transportvorrichtung, die eine Antriebswelle 7 aufweist, die durch einen entsprechenden Antrieb drehend bewegt werden kann. Auf der Antriebswelle 7 ist ein Träger 8 angeordnet, auf dem zumindest ein Transportarm 9 angeordnet ist. In der Praxis werden auf dem Träger 8 über den Umfang verteilt mehrere Transportarm 9 angeordnet werden. Außerdem wird in der Praxis nicht nur der eine Träger 8 vorhanden sein, sondern, wie in Figur 2 dargestellt, beabstandet dazu ein weiterer Träger 8 vorhanden sein. Der Abstand zwischen den beiden Trägern bzw. dem darauf angeordneten gegenüberliegenden Transportarten 9 entspricht in etwa der Breite des Klappenbeutels 1 zwischen den beiden Seitennähten 6.

Der Transportarm 9 weist zumindest eine Öffnung 10 auf, wobei bei diesem Ausführungsbeispiel mehrere Öffnungen 10, hier lochartige Öffnungen, in einer Reihe hintereinander angeordnet sind. Außerdem kann, muss aber nicht, eine weitere Öffnung 11, insbesondere eine weitere Reihe von hintereinander angeordneten Öffnungen 11, in dem Transportarm 9 vorhanden sein. In bevorzugter Weise bilden die Öffnungen 10 eine erste Reihe von Öffnungen hintereinander, während die Öffnungen 11 genauso in einer Reihe hintereinander, parallel zu der Reihe der Öffnungen 10, angeordnet sind. Der Querschnitt der Öffnungen 10,11 kann gleich oder voneinander abweichend sein. Ebenso kann der Querschnitt der Öffnungen 10 in der Reihe hintereinander oder der Querschnitt der Öffnungen 11 in der anderen Reihe hintereinander gleich oder unterschiedlich sein. Bei der Darstellung in der Figur 2 sind nicht dargestellt, aber vorhanden, Mittel zur Erzeugung eines Unterdruckes, der entweder über die Antriebswelle 7 und über den Träger 8 sowie über den Hohlkörperartig ausgebildeten Transportarm 9 zu den Öffnungen 10 und/oder 11 geleitet wird. Es ist auch denkbar, dass die Antriebswelle 7 den eigentlichen Antrieb der Träger 8 übernimmt und über den Träger 8 auf geeignete Weise der erzeugte Unterdruck in Richtung des Transportarm 9 gefördert wird. Schließlich kann, muss aber auch nicht, der Transportarm 9 eine Aussparung 12 aufweisen. Diese Aussparung 12 ist dann vorhanden und erforderlich, wenn der Transportarm 9 rotatorisch um die Antriebswelle 7 herum bewegt wird und sich die Ablagevorrichtung, auf der ein jeder Beutel gestapelt wird, zwischen den beiden parallel zueinander angeordneten Transportarm 9 befindet. Das bedeutet, dass die Seitennähte 6 des Klappenbeutels 1 (bzw. eines andersformartigen Beutels) auf der Oberfläche des Transportarmes 9, in der sich die Öffnungen 10,11 befinden, festgelegt sind und zumindest von der Reihe der hintereinander angeordneten Öffnungen 10 (bzw. in einem Bereich zwischen den beiden parallel hintereinander angeordneten Öffnungsreihen) und bevorzugt auch von der Reihe der hintereinander angeordneten Öffnungen 11 gehalten wird.

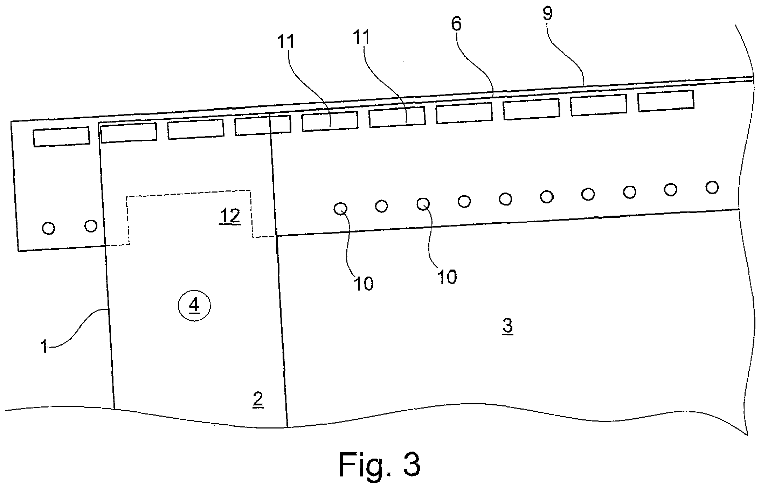

In Figur 3 schließlich ist der Zustand gezeigt, in der der Klappenbeutel 1 auf der Oberfläche des Transportarm 9 aufliegt, nachdem er die Herstellungsvorrichtung verlassen hat. In dem gezeigten Ausführungsbeispiel ist erkennbar, dass der Seitenbereich sowie die Seitennaht 6 auf einem wesentlichen Teil der Oberfläche des Transportarm 9 aufliegt, sodass dieser Bereich durch die Öffnungen 10 und 11 lagefixiert während der Bewegung des Transportarmes 9 ist. Es ist alternativ denkbar, dass die Seitennaht 6 in einem Bereich zwischen den beiden Reihen, die von den Öffnungen 10,11 gebildet werden, liegen oder nur in dem Bereich angeordnet ist, in dem sich die Reihe von Öffnungen 10 hintereinander befindet. Während der Bewegung des Klappenbeutels 1 nach dem Verlassen der Herstellungsvorrichtung ist somit der Bereich um die Seitennaht 6 herum, in dem sich der noch plastifizierte Fügebereich der beiden Lagen von Material befindet, vor der Einwirkung von äußeren Kräften (zum Beispiel durch die Bewegung des Transportarmes) sowie von Eigenkräften des Klappenbeutels 1 geschützt, sodass der Fügebereich während der Bewegung aushärten und eine stabile Verbindung zwischen den beiden Materiallagen bilden kann. In dem Augenblick, in dem die beiden Transportarme 9 an der insbesondere balkenförmigen Ablagevorrichtung vorbeibewegt werden, kann der Klappenbeutel 1 mit seinem zumindest einen Stapelloch 4 gezielt und geführt auf einen Stapelstift der Ablagevorrichtung aufgelegt werden. In diesem Moment kann entweder der Unterdruck durch eine gezielte Ansteuerung der Mittel, die den Unterdruck erzeugen, weggenommen werden, oder der Klappenbeutel 1 wird automatisch von der Oberfläche des Transportarmes 9 gelöst, wenn er auf der insbesondere balkenförmigen Oberfläche der Ablagevorrichtung zur Auflage kommt. Dabei ist selbstverständlich daran zu denken, dass der Unterdruck derart dimensioniert ist, dass er einerseits den Klappenbeutel 1, insbesondere im Bereich seiner Seitennähte 6, während der Bewegung des Transportarmes 9 zuverlässig auf der Oberfläche des Transportarmes 9 fixiert, andererseits aber nicht zu Beschädigungen des Klappenbeutels 1 führt, wenn dieser von der Oberfläche des Transportarmes 9 gelöst wird und danach auf der Ablagevorrichtung zur Ablage gekommen ist.

Auch bei der vorstehend beschriebenen Herstellung und dem beschriebenen Transport sowie der beschriebenen Ablage wird der Beutel zunächst so produziert, das die einlagige Klappe 2 unten liegt (nach unten in Richtung Boden, auf dem die gesamte Vorrichtung aufgestellt ist, weist; zusammen mit der Lage des Materials, in deren Verlängerung sich die Klappe 2 erstreckt; diese Lage des Materials weist dann ebenfalls nach unten, während die zweite Lage nach oben weist) und von den beiden parallel zueinander angeordneten rotierenden Transportarmen 9 dann von unten aufgenommen und um 180° gedreht (Klappe 2 dann oben, zusammen mit der Lage des Materials, in deren Verlängerung sich die Klappe 2 erstreckt; diese Lage des Materials weist dann ebenfalls nach oben, während die zweite Lage jetzt nach unten weist) auf die Stapelstifte (oder vergleichbare Mittel) der Ablagevorrichtung abgelegt.

### Bezugszeichenliste

1. Klappenbeutel
2. Klappe
3. Taschenbereich
4. Stapelloch
5. Boden
6. Seitennaht
7. Antriebswelle
8. Träger
9. Transportarm
10. Loch
11. Öffnung
12. Aussparung

## Patentansprüche

1. Verfahren zur Herstellung und Ablage eines Beutels, insbesondere eines Klappenbeutels (1), wobei der Beutel einen Boden, eine Einfüllöffnung sowie in einem Taschenbereich (3) zwei Lagen aufweist und die beiden Lagen zumindest im Bereich einer Seitennaht (6) des Beutels miteinander verschweißt werden, wobei danach der Beutel mittels zumindest eines Transportarmes (9) zu einer Ablagevorrichtung bewegt und während des Bewegung durch Unterdruck an dem Transportarm (9) gehalten wird, **dadurch gekennzeichnet, dass** der zumindest eine Transportarm (9) parallel zu der Seitennaht (6) des Beutels ausgerichtet ist und der Seitenbereich des Beutels nach der Verschweißung der beiden Lagen, wodurch die Seitennaht (6) gebildet wird, auf den Transportarm (9) aufgelegt wird und der Beutel während der Bewegung zu der Ablagevorrichtung und bis zur Ablage durch Unterdruck an dem Transportarm (9) gehalten wird.

2. Verfahren nach Anspruch 1, **dadurch gekennzeichnet, dass** zwei parallel zueinander ausgerichtete Transportarme (9) vorhanden sind, wobei jeweils eine Seitennaht (6) auf jeweils einen Transportarm (9) nach der Verschweißung abgelegt und dort während der Bewegung des Beutels zu der Ablagevorrichtung bis zur Ablage des Beutels durch Unterdruck gehalten wird.

3. Verfahren nach Anspruch 1 oder 2, **dadurch gekennzeichnet, dass** der Beutel nach der Verschweißung, die die Seitennaht bildet, von dem zumindest einen Transportarm (9) rotatorisch zu der Ablagevorrichtung bewegt wird.

4. Verfahren nach Anspruch 1, 2 oder 3, **dadurch gekennzeichnet, dass** als Beutel mit dem Verfahren ein Klappenbeutel (1) hergestellt, bewegt und auf der Ablagevorrichtung abgelegt wird, wobei der Klappenbeutel (1) nach seiner Herstellung und während seiner Bewegung mit seinem Seitenbereich, in dem sich sowohl die Seitennaht (6) als auch teilweise eine Klappe (2) befindet, auf dem Transportarm (9) aufliegt.

5. Vorrichtung mit einer Herstellungsvorrichtung zur Herstellung und mit einer Ablagevorrichtung zur Ablage eines Beutels, insbesondere eines Klappenbeutels (1), wobei der Beutel einen Boden, eine Einfüllöffnung sowie in einem Taschenbereich (3) zwei Lagen aufweist und die beiden Lagen zumindest im Bereich einer Seitennaht (6) des Beutels miteinander verschweißt werden, wobei danach der Beutel mittels zumindest eines Transportarmes (9) zu der Ablagevorrichtung bewegt und während des Bewegung durch Unterdruck an dem Transportarm (9) gehalten wird, **dadurch gekennzeichnet, dass** der zumindest eine Transportarm (9) parallel zu der Seitennaht (6) des Beutels ausgerichtet ist und der Seitenbereich des Beutels nach der Verschweißung der beiden Lagen, wodurch die Seitennaht (6) gebildet wird, auf den Transportarm (9) aufgelegt wird und der Transportarm (9) zumindest eine einen Unterduck zur Verfügung stellende Öffnung (10) aufweist, über die der Beutel während der Bewegung zu der Ablagevorrichtung und bis zur Ablage durch Unterdruck an dem Transportarm (9) gehalten wird.

6. Vorrichtung nach Anspruch 5, **dadurch gekennzeichnet, dass** der Transportarm (9) mehrere in einer Reihe hintereinander angeordnete Öffnungen (10) aufweist.

7. Vorrichtung nach Anspruch 6, **dadurch gekennzeichnet, dass** der Transportarm (9) parallel zu den mehreren in einer Reihe hintereinander angeordnete Öffnungen (10) eine weitere Reihe von in einer Reihe hintereinander angeordnete Öffnungen (11) aufweist.

8. Vorrichtung nach Anspruch 5, 6 oder 7, **dadurch gekennzeichnet, dass** der Transportarm (9) eine Aussparung (12) aufweist, wobei die Aussparung (12) dort angeordnet ist, wo der Transportarm (9) während seiner Bewegung an der Ablagevorrichtung vorbei bewegt wird.

9. Vorrichtung nach Anspruch 5, 6,7 oder 8, **dadurch gekennzeichnet, dass** der Beutel ein Klappenbeutel (1) ist, wobei der Klappenbeutel (1) nach seiner Herstellung und während seiner Bewegung mit seinem Seitenbereich, in dem sich sowohl die Seitennaht (6) als auch teilweise eine Klappe (2) befindet, auf dem Transportarm (9) aufliegt.

## Claims

1. Method for producing and depositing a bag, in particular a flap bag (1), wherein the bag has a base, a filling opening and, in a pocket region (3), two layers, and the two layers are welded to each other at least in the region of a side seam (6) of the bag, wherein the bag is then moved by means of at least one transport arm (9) to a depositing apparatus and, during the movement, is held on the transport arm (9) by negative pressure, **characterized in that** the at least one transport arm (9) is oriented parallel to the side seam (6) of the bag, and, after the welding of the two layers, as a result of which the side seam (6) is formed, the side region of the bag is placed onto the transport arm (9) and the bag is held on the transport arm (9) by negative pressure during the movement to the depositing apparatus and up until the depositing.

2. Method according to Claim 1, **characterized in that** there are two transport arms (9) oriented parallel to each other, wherein a side seam (6) is in each case made on a respective transport arm (9) after the welding and is held there by negative pressure during the movement of the bag to the depositing apparatus up until the depositing of the bag.

3. Method according to Claim 1 or 2, **characterized in that**, after the welding, which forms the side seam, the bag is moved by the at least one transport arm (9) in a rotational manner to the depositing apparatus.

4. Method according to Claim 1, 2 or 3, **characterized in that** a flap bag (1), as the bag, is produced, moved and deposited on the depositing apparatus using the method, wherein, after its production and during its movement, the flap bag (1) rests with its side region, in which both the side seam (6) and also partially a flap (2) are located, on the transport arm (9).

5. Apparatus comprising a production apparatus for producing, and comprising a depositing apparatus for depositing, a bag, in particular a flap bag (1), wherein the bag has a base, a filling opening and, in a pocket region (3), two layers, and the two layers are welded to each other at least in the region of a side seam (6) of the bag, wherein the bag is then moved by means of at least one transport arm (9) to the depositing apparatus and, during the movement, is held on the transport arm (9) by negative pressure, **characterized in that** the at least one transport arm (9) is oriented parallel to the side seam (6) of the bag, and, after the welding of the two layers, as a result of which the side seam (6) is formed, the side region of the bag is placed onto the transport arm (9) and the transport arm (9) has at least one opening (10) which provides a negative pressure and via which the bag is held on the transport arm (9) by negative pressure during the movement to the depositing apparatus and up until the depositing.

6. Apparatus according to Claim 5, **characterized in that** the transport arm (9) has a plurality of openings (10) arranged one behind another in a row.

7. Apparatus according to Claim 6, **characterized in that** parallel to the plurality of openings (10) arranged one behind another in a row, the transport arm (9) has a further row of openings (11) arranged one behind another in a row.

8. Apparatus according to Claim 5, 6 or 7, **characterized in that** the transport arm (9) has a recess (12), wherein the recess (12) is arranged at the point where the transport arm (9) during its movement is moved passed the depositing apparatus.

9. Apparatus according to Claim 5, 6, 7 or 8, **characterized in that** the bag is a flap bag (1), wherein, after its production and during its movement, the flap bag (1) rests with its side region, in which both the side seam (6) and also partially a flap (2) are located, on the transport arm (9).

## Revendications

1. Procédé permettant de fabriquer et de déposer un sachet, en particulier un sachet à rabat (1), le sachet présentant un fond, une ouverture de remplissage ainsi que deux couches dans une zone formant poche (3), et les deux couches étant soudées l'une à l'autre au moins au niveau d'une soudure latérale (6) du sachet, dans lequel le sachet est ensuite déplacé au moyen d'au moins un bras de transport (9) jusqu'à un dispositif de dépose et maintenu par dépression sur le bras de transport (9) pendant le mouvement, **caractérisé en ce que** ledit au moins un bras de transport (9) est orienté en parallèle à la soudure latérale (6) du sachet, et la zone latérale du sachet, après le soudage des deux couches qui permet de former la soudure latérale (6), est déposée sur le bras de transport (9), et le sachet est maintenu par dépression sur le bras de transport (9) pendant le déplacement jusqu'au dispositif de dépose et jusqu'à la dépose.

2. Procédé selon la revendication 1, **caractérisé en ce qu'**il existe deux bras de transport (9) orientés en parallèle l'un à l'autre, dans lequel respectivement une soudure latérale (6) est déposée sur un bras de transport (9) respectivement après le soudage, et y est maintenue par dépression pendant le déplacement du sachet jusqu'au dispositif de dépose jusqu'à la dépose du sachet.

3. Procédé selon la revendication 1 ou 2, **caractérisé en ce qu'**après le soudage qui forme la couture latérale, le sachet est déplacé par ledit au moins un bras de transport (9) en rotation jusqu'au dispositif de dépose.

4. Procédé selon la revendication 1, 2 ou 3, **caractérisé en ce que** par le procédé on fabrique en tant que sachet un sachet à rabat (1), on le déplace et on le dépose sur le dispositif de dépose, dans lequel, après la fabrication et pendant le déplacement du sachet à rabat (1) celui-ci repose sur le bras de transport (9) par sa zone latérale où se trouvent à la fois la soudure latérale (6) et en partie aussi un rabat (2).

5. Dispositif comprenant un dispositif de fabrication destiné à la fabrication d'un sachet et un dispositif de dépose destiné à la dépose d'un sachet, en particulier d'un sachet à rabat (1), le sachet présentant un fond, une ouverture de remplissage ainsi que deux couches dans une zone formant poche (3), et les deux couches étant soudées l'une à l'autre au moins au niveau d'une soudure latérale (6) du sachet, dans lequel le sachet est ensuite déplacé au moyen d'au moins un bras de transport (9) jusqu'au dispositif de dépose et maintenu par dépression sur le bras de transport (9) pendant le déplacement, **caractérisé en ce que** ledit au moins un bras de transport (9) est orienté en parallèle à la soudure latérale (6) du sachet, et la zone latérale du sachet, après le soudage des deux couches qui permet de former la soudure latérale (6), est déposée sur le bras de transport (9), et le bras de transport (9) présente au moins une ouverture (10) fournissant une dépression par laquelle le sachet est maintenu par dépression sur le bras de transport (9) pendant le déplacement jusqu'au dispositif de dépose et jusqu'à la dépose.

6. Dispositif selon la revendication 5, **caractérisé en ce que** le bras de transport (9) présente plusieurs ouvertures (10) disposées les unes après les autres dans une rangée.

7. Dispositif selon la revendication 6, **caractérisé en ce que** le bras de transport (9) présente en parallèle aux plusieurs ouvertures (10) disposées les unes après les autres dans une rangée une autre rangée d'ouvertures (11) disposées les unes après les autres dans une rangée.

8. Dispositif selon la revendication 5, 6 ou 7, **caractérisé en ce que** le bras de transport (9) présente un évidement (12), l'évidement (12) étant disposé à l'endroit où le bras de transport (9) est déplacé pendant son déplacement devant le dispositif de dépose.

9. Dispositif selon la revendication 5, 6, 7 ou 8, **caractérisé en ce que** le sachet est un sachet à rabat (1), le sachet à rabat (1), après sa fabrication et pendant son déplacement, reposant sur le bras de transport (9) par sa zone latérale dans laquelle se trouvent à la fois la soudure latérale (6) et en partie aussi un rabat (2).
